Europäisches Patentamt

European Patent Office

Office européen des brevets

(11) Veröffentlichungsnummer: **0 391 244**
**A1**

(12) **EUROPÄISCHE PATENTANMELDUNG**

(21) Anmeldenummer: **90105972.5**

(51) Int. Cl.5: **A01K 83/00, A01K 83/06**

(22) Anmeldetag: **29.03.90**

(30) Priorität: **01.04.89 DE 3910525**

(43) Veröffentlichungstag der Anmeldung:
**10.10.90 Patentblatt 90/41**

(84) Benannte Vertragsstaaten:
**AT BE CH DE DK ES FR GB GR IT LI LU NL SE**

(71) Anmelder: **Mozil, Walter**
**Hauptstrasse 11**
**D-8409 Tegernheim(DE)**

(72) Erfinder: **Mozil, Walter**
**Hauptstrasse 11**
**D-8409 Tegernheim(DE)**

(74) Vertreter: **Graf, Helmut, Dipl.-Ing. et al**
**Greflinger Strasse 7 Postfach 382**
**D-8400 Regensburg(DE)**

(54) **Hakenanordnung zum Fischen von Raubfischen.**

(57) Die Erfindung bezieht sich auf eine Hakenanordnung zum Fischen von Raubfischen mittels einer Angel und unter Verwendung von Köderfischen (1), mit einem Vorhaken (4), der an einem Ende seines Hakenschaftes (5) ein Hakenende zum Festlegen des Vorhakens (4) am Köderfisch (1) und am anderen Ende seines Hakenschaftes (5) eine Öse (7) aufweist, in der ein Angelhaken (3) mit seinem eine Spitze mit Widerhaken (8) aufweisenden Hakenende eingehängt ist. Um auch bei Fischen von Süßwasserraubfischen eine frühen und sicheren Anhieb zu ermöglichen, ist diese Hakenanordnung so ausgebildet, daß sich die Öse (7) des Vorhakens (4) über eine Teillänge des Hakenschaftes des Vorhakens erstreckt, so daß eine Relativbewegung zwischen Vorhaken (4) und Angelhaken (3) möglich ist.

Fig.2

EP 0 391 244 A1

## Hakenanordnung zum Fischen von Raubfischen

Die Erfindung bezieht sich auf eine Hakenanordnung zum Fischen von Raubfischen gemäß Oberbegriff Patentanspruch 1.

Bekannt ist eine Hakenanordnung (US-PS 4 750 291), die zum Hochseefischen, d. h. zum Fischen von Hochsee-Raubfischen und dabei speziell zum Fischen von Haien bestimmt ist. Derartige Hochsee-Raubfische werden mit Köderfischen vom Boot aus mit nachgezogener Hakenanordnung gefischt. Die Hakenanordnung besteht dabei aus einem Vorhaken und einem Angelhaken. Der Vorhaken besitzt an einem Ende seines Hakenschaftes ein umgebogenes, mit einem Widerhaken versehenes Hakenende zum Festlegen des Köderfisches und am anderen Ende seines Hakenschaftes eine Öse. Mit dieser Öse ist der Vorhaken an dem umgebogenen, mit einer Spitze und mit einem Widerhaken versehenen Hakenende des Angelhakens derart befestigt, daß eine relativ starre Verbindung zwicshen dem Angelhaken und dem Vorhaken besteht, die im wesentlichen lediglich eine Schwenkbewegung des über das Hakenende des Angelhakens wegstehenden Vorhakens relativ zum Hakenende zuläßt. Die mit dieser bekannten Hakenanordnung zu fischenden Hochsee-Raubfische haben die Eigenschaften, daß sie den angebotenen Köderfisch mit dem Schwanz voraus packen bzw. verschlingen, so daß auf jeden Fall zunächst der Köderfisch und am Schluß erst die am Kopf des Köderfisches befestigte Hakenanordnung in den Rachen des Hochsee-Raubfisches gelangt. Hierdurch ist es möglich, beim Anhieb, d. h. beim ruckartigen Einholen der die Hakenanordnung aufweisenden Angelschnur den angesprochenen Hochsee-Raubfisch mit der Spitze des Angelhakens im Rachen optimal zu treffen, so daß der angesprochene Hochsee-Raubfisch nicht mehr verlorengehen kann.

Beim Fischen von Süßwasser-Raubfischen, d. h. bei der Süßwasser- bzw. Uferfischerei mit Angeln unter Verwendung von Köderfischen besteht aber das besondere Problem, daß Süßwasser-Raubfische einen angebotenen Köderfisch grundsätzlich mit dem Kopf voraus packen bzw. verschlingen, so daß unmittelbar nach dem Packen bzw. Fassen des Köderfisches bereits der Anhieb erfolgen müßte, sofern verhindert werden soll, daß der Köderfisch zusammen mit der Hakenanordnung vom Raubfisch vollständig heruntergeschlungen wird. In einem solchen Fall wäre es dann nämlich nicht mehr möglich, beispielsweise untermassige Fische schonend von der Hakenanordnung zu befreien und in das Gewässer zurückzugeben. Ein derart frühzeitiger Anhieb bereits beim ersten Packen des Köderfisches hat aber den Nachteil, daß ein sicheres Treffen des Raubfisches nicht gewährleistet ist, so daß oftmals der Köderfisch und der bereits angesprochene Raubfisch verlorengehen.

Die vorgenannten Nachteile bestehen nicht nur bei Verwendung von Angelhaken als Einzelhaken, die in den unterschiedlichsten Ausführungen bekannt sind (DE-Katalog "Balzer-Angelsport" '83), sondern insbesondere auch dann, wenn die vorgenannte bekannte, aus Vorhaken und Angelhaken bestehende Hakenanordnung zum Fischen von Süßwasser-Raubfischen mit Köderfischen verwendet wird.

Bekannt ist es auch, am Rutengriff einer Angel einen Gummiring vorzusehen, der dann als Hakenhalter zum Fixieren des Angelhakens im Nicht-Gebrauchszustand dient (DE-Zeitung "Fisch und Fang").

Der Erfindung liegt die Aufgabe zugrunde, eine Hakenanordnung aufzuzeigen, die ein wesentlich zuverlässigeres und erfolgreiches Fischen von Süßwasser-Raubfischen mit Köderfischen ermöglicht.

Zur Lösung dieser Aufgabe ist eine Hakenanordnung entsprechend dem kennzeichnenden Teil des Patentanspruches 1 ausgebildet.

Da sich bei der erfindungsgemäßen Hakenanordnung die Öse des Vorhakens über eine Teillänge des Hakenschaftes des Vorhakens erstreckt, die (Teillänge) vorzugsweise größer ist als der Abstand, den das rückwärtige Ende des Widerhakens des Angelhakens von der Spitze dieses Angelhakens aufweist, ist eine Relativbewegung des Angelhakens zum Vorhaken und damit beim Anhieb auch eine Relativbewegung zwischen dem Angelhaken und dem Süßwasser-Raubfisch möglich, obwohl dieser den angebotenen Köderfisch am Kopf gepackt hat und hält. Durch diese Relativbewegung zwischen dem Angelhaken und dem Vorhaken kann somit der jeweilige Süßwasser-Raubfisch bereits bei einem frühen Anhieb sicher und zuverlässig im Maul bzw. Rachen getroffen werden, so daß trotz des frühzeitigen Anhiebes die Zahl der verlorengegangenen Fische wesentlich reduziert wird. Die erfindungsgemäße Hakenanordnung bietet somit auch den Vorteil, daß untermassige Fische schonend von der Angel abgenommen und ins Fischwasser zurückgegeben werden können.

Weiterbildungen der Erfindung sind Gegenstand der Unteransprüche.

Die Erfindung wird im Folgenden anhand der Figuren an einem Ausführungsbeispiel näher erläutert. Es zeigen:

Fig. 1 in schematischer Darstellung und in Seitenansicht den Kopfbereich eines Köderfisches, zusammen mit der dort vorgesehenen, aus dem Vorhaken und dem eigentlichen Angelhaken bestehenden Hakenanordnung;

Fig. 2 in vergrößerter Einzeldarstellung die Hakenanordnung nach Fig. 1;

Fig. 3 in Einzeldarstellung die Öse des Vorhakens.

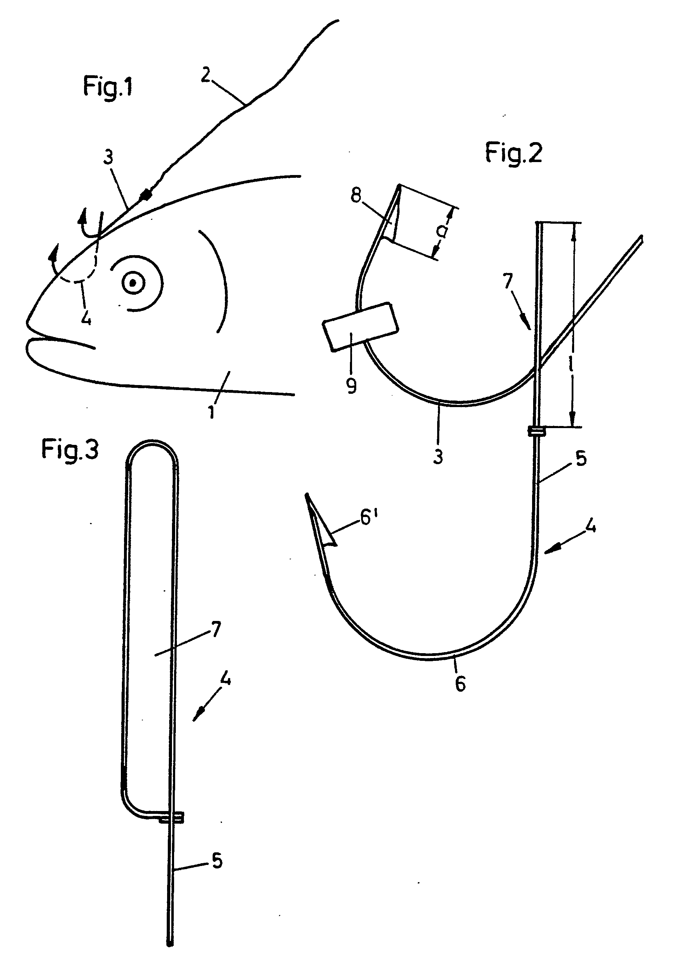

In den Figuren ist 1 ein Köderfisch, der zum Fischen von Raubfischen (z.B. Hechten) mit Hilfe einer Angel dient, von welcher lediglich eine Teillänge der Angelschnur 2 sowie ein Angelhaken 3 üblicher Ausbildung wiedergegeben sind. Im Gegensatz zu der bisher üblichen Methode ist der Köderfisch 1 nicht direkt am Angelhaken 3 festgelegt, sondern zum Befe stigen des Köderfisches 1 am Angelhaken 3 dient ein zusätzlicher Haken 4, der auch als "Vorhaken" bezeichnet werden kann. Dieser Vorhaken 4, der vorzugsweise aus dem gleichen Material wie übliche Angelhaken, d.h. aus Stahldraht gefertigt ist, besitzt bei der dargestellten Ausführungsform einen im wesentlichen geradlinigen Hakenschaft 5, der im Bereich seines einen Endes in das Hakenende 6 übergeht und im Bereich seines anderen Endes mit einer Öse 7 versehen ist, die sich über einen relativ großen Teil des Hakenschaftes 5 erstreckt. Am Hakenende 6 besitzt der Vorhaken 4 eine mit einem Widerhaken 6′ versehene Spitze. Der Vorhaken 4 dient für die Verwendung bei größeren Köderfischen 1. Wie sich aus dem Vergleich der Figuren 2 und 3 ergibt, ist hierbei die Öse 7 so gebildet, daß deren Ebene senkrecht zu derjenigen Ebene liegt, in der das abgebogene Hakenende 6 angeordnet ist.

Zum Befestigen des Köderfisches 1 am Angelhaken 3 wird der Vorhaken 4 mit dem Hakenende 6 an der Kopfplatte des Köderfisches 1 derart festgelegt, daß der Hakenschaft 5 mit der Öse 7 über die Kopfplatte nach oben wegsteht, wobei zweckmäßigerweise auch die Spitze des Hakenendes 6 der Kopfvorderseite des Köderfisches 1 näherliegt als der Hakenschaft 5. Der Angelhaken 3 wird mit seinem Hakenende durch Einführen in die Öse 7 an dem Vorhaken 4 derart eingehängt bzw. befestigt, daß die mit dem Widerhaken 8 versehene Spitze des Angelhakens 3 ebenfalls zur Vorderseite des Kopfes des Köderfisches gerichtet ist bzw. sich auf der der Vorderseite des Kopfes zugewendeten Seite des Vorhakens befindet, wie dies in der Fig. 1 ausdrücklich dargestellt ist. Um ein Herausgleiten des Angelhakens 3 aus der Öse 7 des Vorhakens 4 zu vermeiden, ist auf den Angelhaken 3 eine Sicherungsscheibe 9 aus elastischem Material aufgeschoben.

Die vorbeschriebene, unter Verwendung des Vorhakens 4 erfolgte Befestigung des Köderfisches 1 am Angelhaken 3 ermöglicht es nicht nur, den Angelhaken 3 relativ klein zu halten, sondern durch diese Befestigung wird vor allem erreicht, daß die mit dem Widerhaken 8 versehene Spitze des Angelhakens 3 so angeordnet ist, daß ein den Köderfisch 1 annehmender Raubfisch von der mit dem Widerhaken 8 versehenen Spitze des Angelhakens 3 beim Anhieb optimal im Rachen getroffen werden kann. Dies wird zunächst dadurch ermöglicht, daß Köderfische von Raubfischen generell mit dem Kopf voraus gefressen werden. Wesentlich ist aber auch, daß durch die relativ lange Öse 7 beim Anhieb, d.h. beim plötzlichen Anziehen der Angelschnur 2 eine Relativbewegung zwischen dem Angelhaken 3 und dem Vorhaken 4 und damit auch zwischen dem Angelhaken 3 und dem Köderfisch 1 möglich ist, so daß die mit dem Widerhaken 8 versehene Spitze des Angelhakens 3 auch tatsächlich in den den Köderfisch angenommenen Raubfisch eindringen kann, und zwar derart, daß dieser von dem Angelhaken 3 nicht mehr verloren gehen kann. Die Länge 1 der Öse 7 ist hierbei auf jeden Fall wesentlich größer als der Abstand a, den das Ende des Widerhakens 8 von der Spitze des Angelhakens 3 besitzt.

Da mit Hilfe des Vorhakens 4 die mit dem Widerhaken 8 versehene Spitze des Angelhakens 3 in einer für ein sicheres Treffen optimalen Weise an der Kopfplatte des Köderfisches 1 befestigt werden kann, ist nach der Annahme des Köderfisches 1 durch einen Raubfisch an Anhieb wesentlich früher möglich als bei bisher üblichen Methoden, und zwar ohne die Gefahr, daß der bereits angebissene Raubfisch wieder verloren geht. Da mittels des Vorhakens 4 eine Positionierung des Angelhakens 3 möglich ist, die ein sicheres Treffen des jeweiligen Raubfisches mit der mit dem Widerhaken 8 versehenen Spitze des Angelhakens 3 bereits im Rachen bzw. Maul gewährleistet, hat die Erfindung auch den Vorteil, daß beim Fischen untermassige, gefangene Fische schonend von der Angel befreit und ins Gewässer zurückgegeben werden können.

Bei Verwendung von kleineren Köderfischen 1 kann es zweckmäßig sein, den Vorhaken 4 so an der Kopfplatte des Köderfisches 1 zu befestigen, da die Ebene des Hakenendes nicht in Längsrichtung des Köderfisches, sondern hierzu um etwa 90°, d.h. in etwa quer zu der Längsrichtung des Köderfisches liegt. In diesem Fall ist dann der Vorhaken 4 so hergestellt, daß die Ebene der Öse 7 und die Ebene des Hakenendes 6 eine gemeinsame Ebene besitzt oder parallel zueinander liegen.

Die Erfindung wurde voranstehend an Ausführungsbeispielen beschrieben. Es versteht sich, daß Änderungen sowie Abwandlungen möglich sind, ohne daß dadurch der der Erfindung zugrundeliegende Erfindungsgedanke verlassen wird. So ist es beispielsweise möglich, am Vorhaken 4 auf den dortigen Widerhaken 6′ zu verzichten.

**Ansprüche**

1. Hakenanordnung zum Fischen von Raubfischen mittels einer Angel und unter Verwendung von Köderfischen, mit einem Vorhaken (4), der an einem Ende seines Hakenschaftes (5) ein Hakenende (6) zum Festlegen des Vorhakens (4) am Köderfisch (1) und am anderen Ende seines Hakenschaftes (5) eine Öse (7) aufweist, in der ein Angelhaken (3) mit seinem eine Spitze mit Widerhaken (8) aufweisenden Hakenende eingehängt ist, dadurch gekennzeichnet, daß sich die Öse (7) des Vorhakens (4) über eine Teillänge (1) des Hakenschaftes (5) des Vorhakens (4) erstreckt, so daß eine Relativbewegung zwischen Vorhaken (4) und Angelhaken (3) möglich ist.

2. Hakenanordnung nach Anspruch 1, dadurch gekennzeichnet, daß die Teillänge mindestens gleich, bevorzugt aber größer ist als der Abstand (a), den das rückwärtige Ende des Widerhakens (8) des Angelhakens (3) von der Spitze dieses Angelhakens (3) besitzt.

3. Hakenanordnung nach Anspruch 1 oder 2, dadurch gekennzeichnet, daß die Öse (7) in einer Ebene liegt, die etwa senkrecht zu derjenigen Ebene angeordnet ist, die durch das Hakenende (6) des Vorhakens (4) bestimmt ist.

4. Hakenanordnung nach Anspruch 1 oder 2, dadurch gekennzeichnet, daß die Öse (7) und das Hakenende (6) des Vorhakens (4) in einer gemeinsamen Ebene oder in parallel zueinander verlaufenden Ebenen liegen.

5. Hakenanordnung nach einem der Ansprüche 1 bis 4, dadurch gekennzeichnet, daß der Vorhaken (4) an der Spitze seines Hakenendes (6) einen Widerhaken (6') besitzt.

6. Hakenanordnung nach einem der Ansprüche 1 bis 5, gekennzeichnet durch ein am Angelhaken vorgesehenes Sicherungselement, vorzugsweise durch einen auf den Angelhaken (3) aufschiebbaren Ring (9) bevorzugt aus elastischem Material zur Sicherung des Vorhakens (4) am Angelhaken (3).

EP 0 391 244 A1

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-1085713 (PUJADAS BARREBAS)<br>* das ganze Dokument *<br>--- | 1, 5 | A01K83/00<br>A01K83/06 |
| A | US-A-2540276 (MOLER)<br>* das ganze Dokument *<br>----- | 6 | |
| | | | **RECHERCHIERTE SACHGEBIETE (Int. Cl.5 )**<br><br>A01K |

Der vorliegende Recherchenbericht wurde für alle Patentansprüche erstellt

| Recherchenort | Abschlußdatum der Recherche | Prüfer |
|---|---|---|
| DEN HAAG | 29 JUNI 1990 | VERDOODT S.J.M. |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
     Dokument